# EUROPEAN PATENT APPLICATION

(11) **EP 1 334 652 A1**
(43) Date of publication of application: **13.08.2003**
(21) Application number: 03386001.6
(22) Date of filing: 28.01.2003
(51) Int. Cl.: A01D 46/00, A01D 51/00

(54) **Portable machine for collecting olives**

(30) Priority: 12.02.2002 GR 2002100078
(71) Applicant: Kloukiotis, Evangelos, Samou 83100 (GR)
(72) Inventor: Kloukiotis, Evangelos, Samou 83100 (GR)

(57) **Abstract**

The pneumatic portable olive collection device is a device which can collect olives and leaves and inside the reception chamber (2) it can achieve their separation by using tubair streams. It is an easy to use device which reduces the olive collection and selection time.

## Description

Absorptive olive collectors are used in the cases of olive collection from the ground by one user and in a manner that the fast and automatic separation of the absorbed solid bodies is achieved by the machine.

The technical problem that this device aims to solve is the separation of the various bodies collected from the ground, where with the conventional collection methods (use of olive collection cloths or common suction - absorption devices etc.) stones, soil, leaves and olives gather together and the selection and separation of the olives from the rest useless bodies becomes difficult.

According to this invention, this is achieved with the use of the air extractor - nozzle which features a particular cross section and surface area and which is connected to a chamber (2) for the reception and collection of absorbed bodies, which develops two opposite rising currents, where in combination with the placement of an inclined diaphragm (9) to the reception chamber (2), the separation of the bodies (leaves and olives) is permitted along with the emptying of the chamber from the leaves. This invention has the great advantage that pure olives are collected in significant quantities and in a short time period, using a low weight portable device and without some particularly high effort.

The portable olive collection machine consists of a plastic tube (1) with a nozzle (12) which ends to an obtuse angle so that olives and leaves pass better. The nozzle (12) features a metallic plate (13) with two oblong holes (14) so that the height of the nozzle (12) from the ground can be altered. It is noted that the mouth of the nozzle (12) is of a rectangular shape. Of course, the nozzle can be manufactured in a circular shape, in which case a screw (15) is used for regulating its distance from the ground. When a circular mouth nozzle is used, the device can be used for collecting any kind of fruit. The other end of the tube ends into a metallic box (reception chamber) (2). The cross section of this end is half that of the other end with the nozzle, as in this manner it is possible to achieve separation in the reception chamber (2). This tube (1), due to its dimensions, only absorbs olives and leaves, whereas it cannot absorb stones. In the upper part of the metallic box (2) an air extractor is attached with a throttle lever (4) for increasing or reducing the speed of rotation. Furthermore, the reception chamber (2) features an inclined diaphragm (9) which faces downwards and which ends in a hole with a diameter equal to that of hole (11) of the tube at the point of connection with the reception chamber (2). It must be also noted that opposite to the inlet point of materials into the chamber (2) and slightly below the hole of the inclined diaphragm (9), an adjusting valve is fitted (8) for ambient air introduction. Thus, inside the reception chamber (2) two rising air streams develop, one from the hole ,(11) of the tube and one from the adjusting valve (8). These streams are capable to lift the leaves, whereas the olives are driven via the hole of the inclined diaphragm (9) to the lower part of the chamber (2) which plays the role of the storage space. The leaves, with the assistance of the air extractor (3) come off. The base of the chamber, the storage space, is inclined and features an opening for the olives to come off.

The throttle lever is fitted to the side of the equipment (hand throttle) (4) and a lever (6) is attached on it which opens the door (7) in the storage space of the chamber. For continuing, once the chamber (2) is emptied, the door (7) is shut and with the throttle (4) being pushed downwards, the speed of the air extractor (3) is increased.

All the equipment can be adapted to be carried at the back of the user with the use of belts (10).

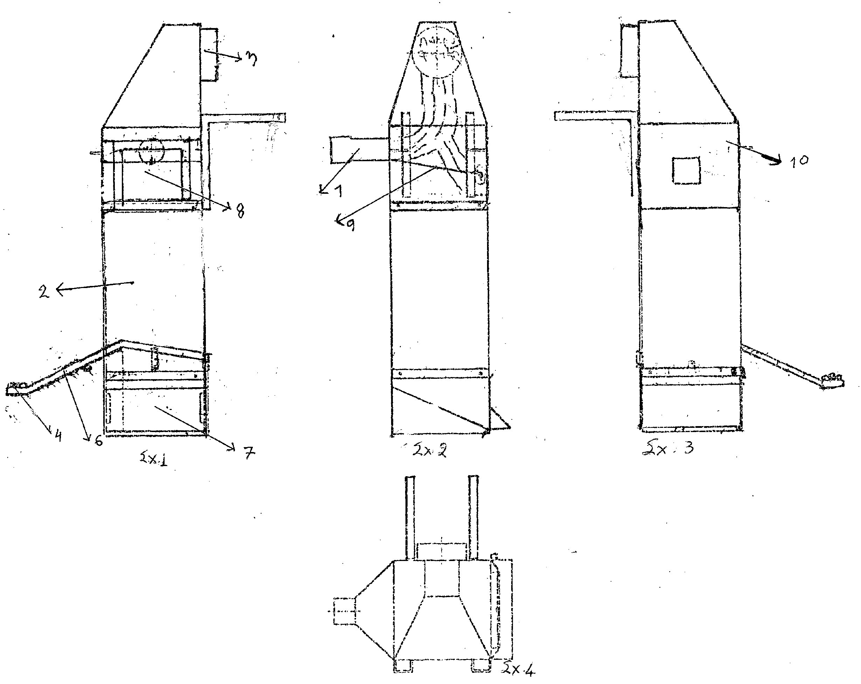

Drawing 1 illustrates a side view of the device, where the reception chamber is denoted as item 2, item 3 is the air extractor, item 4 is the hand throttle, item 6 the lever, item 7 the door of the storage space, item 8 the adjusting valve and item 11 the hole where the flexible tube is connected to the reception chamber (20).

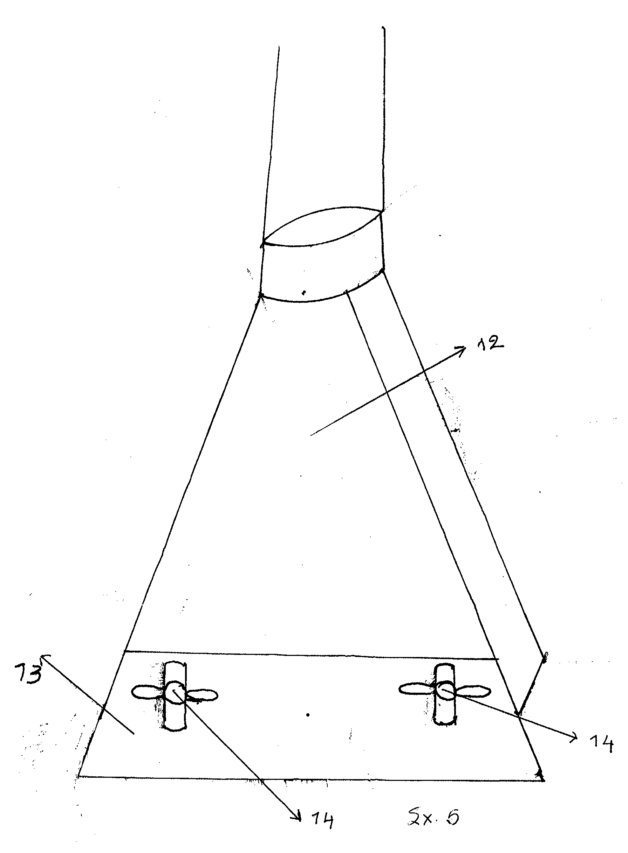

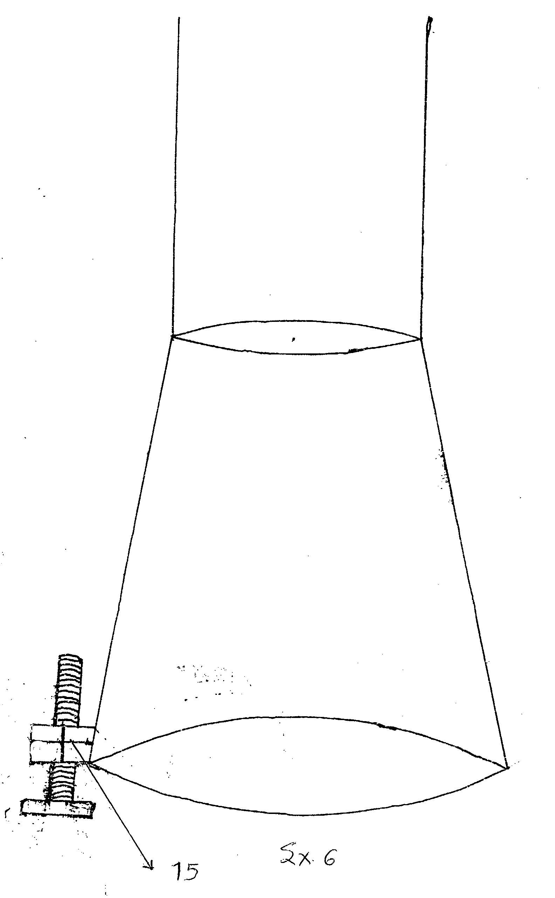

Drawing 2 illustrates the flexible tube 1 and the inclined diaphragm 9 and drawing 3 illustrates item 10, the support belts for hanging the device at the back of the user.

## Claims

1. The portable olive collection device consisting of:
A) A flexible tube (1) with different cross sections at its ends
B) The metallic box (2) (Reception chamber) which is divided in two parts with the assistance of an inclined diaphragm (9) which features a hole of a diameter equal to the hole (11). Furthermore, the reception chamber (2) features two air inlets, one at the point where the flexible tube (11) is joined and one at the adjusting valve (8), resulting in the development of two rising air streams and in achieving the separation of the leaves from the olives and in driving the leaves to the environment via the air extractor (3).
C) The air extractor (3)
D) The gas throttle (4)
E) The lever (6) which opens the door at the lower part of the chamber.

2. The portable olive collection device according to claim 1 is **characterized by** that the nozzle (12) features a metallic plate (13) with two oblong holes (14) so that the height of the nozzle from the ground is adjusted. It is noted that the mouth of the nozzle has a rectangular shape.

3. The portable olive collection device according to claim 2 is **characterized by** that the nozzle (12) can feature a circular mouth and in that in this case the screw (15) regulates the height from the ground and the device can be used for any type of fruit.
